# DEMANDE DE BREVET EUROPEEN

(11) **EP 4 180 741 A1**
(43) Date de publication de la demande: **17.05.2023**
(21) Numéro de dépôt: 22207227.4
(22) Date de dépôt: 14.11.2022
(51) Int. Cl.: F24S 25/50

(54) **SYSTÈME DE RIGIDIFICATION D'UNE STRUCTURE**

(30) Priorité: 16.11.2021 FR 2112112
(71) Demandeur: Nexans, 92400 Courbevoie (FR)
(72) Inventeur: CHARTIER, Emilie, 13090 AIX EN PROVENCE (FR); AMAR, Jérémy, 13290 LES MILLES (FR); PRINTEMPS, Morgan, 13600 LA CIOTAT (FR); QUEVILLIER, Ludovic, 13400 AUBAGNE (FR); RICHARD, Aymeric, 13770 VENELLES (FR); GILLET, Lucas, 83640 SAINT ZACHARIE (FR); SOULIE, Emile, 13650 MEYRARGUES (FR)
(74) Mandataire: Ipsilon

(57) **Abrégé**

Système (1) de rigidification d'une structure (2), comportant :
- au moins une paire de tirants (3), chaque tirant (3) de la paire de tirants (3) comportant une première extrémité (4) fixée à la structure (2) et une deuxième extrémité (5),
- au moins un dispositif (6) de mise en tension des tirants (3) comportant :
- un élément de liaison déformable (7) fixé à la deuxième extrémité (5) de chaque tirant (3) de manière à relier les tirants (3),
- un actionneur (10) configuré pour déformer l'élément de liaison (7) de façon à l'amener à passer d'une configuration inactive dans laquelle les tirants (3) sont dans un premier état de tension à une configuration active dans laquelle les tirants (3) sont dans un deuxième état de tension, différent du premier état de tension.

## Description

### Domaine technique

La présente invention concerne de manière générale la mise en tension de tirants rigides sur des structures, et plus particulièrement un système de rigidification d'une structure, un procédé de rigidification d'une structure à l'aide dudit système, une structure en treillis comportant ledit système et un suiveur solaire comportant ladite structure.

### Arrière-plan technologique

Dans de nombreuses structures, notamment des structures métalliques en treillis, des tirants sont utilisés afin de rigidifier l'ensemble.

Il est connu d'utiliser des tirants soudés dans des poutres à treillis, notamment pour la fabrication de portiques. Il n'est toutefois pas possible de mettre en tension de tels tirants soudés de manière à obtenir des tirants précontraints.

Une solution connue est l'utilisation de tirants dont la mise en tension est rendue possible grâce à des ridoirs (également appelés tendeurs à lanterne). Un tel dispositif comporte typiquement un premier tirant ayant une extrémité fixe et une extrémité pourvue d'un filetage droit, un deuxième tirant ayant une extrémité fixe et une extrémité pourvue d'un filetage gauche, et un manchon central sur lequel se visse les extrémités filetées des premier et deuxième tirants. La rotation du manchon central entraîne alors la mise en tension des premier et deuxième tirants.

Le document WO 2018/033495, au nom de la Demanderesse, décrit une structure en treillis comportant des tirants, ladite structure en treillis servant de structure de support d'une table d'un suiveur solaire. Or, les éléments constituants la structure sur laquelle sont fixés les tirants sont fabriqués selon des tolérances de fabrication, faisant ainsi varier sensiblement la distance entre les points de fixation des tirants sur la structure. La compensation de ces écarts de tolérance ne peut être faite en introduisant du jeu au niveau des points de fixation, le risque de flambage des tirants devenant élevé dans ces circonstances. Afin d'éviter le flambage des tirants, ces derniers doivent être fixés de préférence avec une légère pré-tension en traction. L'utilisation d'un système de filetage / écrou en bout de tirant permet de résoudre cette problématique. Cependant cette solution s'avère coûteuse et nécessite un temps de montage important.

Le document WO 2021/009425, au nom de la Demanderesse, décrit un tirant apte à être fixé en deux points de fixation d'une structure au moyen de deux vis de fixation, ledit tirant comportant un corps longitudinal pourvu d'une première extrémité de fixation comprenant une première ouverture circulaire et d'une deuxième extrémité de fixation comprenant une deuxième ouverture circulaire. Ledit tirant comporte une rondelle comprenant un corps d'enveloppe externe cylindrique et dotée d'un orifice traversant excentré, ladite rondelle étant reçue concentriquement dans la deuxième ouverture circulaire et mobile en rotation dans ladite deuxième ouverture circulaire de manière à modifier la position de l'orifice excentré pour faire varier une distance d'entraxe de fixation entre ledit orifice excentré et la première ouverture circulaire. L'utilisation d'une telle rondelle excentrique permet d'assurer à la fois la fixation du tirant sur la structure et la compensation des écarts de tolérance mentionnés précédemment. En effet, l'application d'un couple de serrage sur la rondelle excentrique permet de mettre en tension le tirant. Toutefois, il s'avère difficile de quantifier la tension appliquée sur le tirant avec une telle solution, sans compter le temps important nécessaire au réglage de mise en tension du tirant.

Un but de la présente invention est d'améliorer les systèmes de mises en tension des tirants, notamment celui décrit dans le document WO 2021/009425, et notamment de mieux maitriser voire quantifier précisément la tension appliquée sur les tirants et réduire le temps nécessaire pour mettre en tension les tirants, afin de répondre à la problématique de compensation des écarts de tolérance et renforcer mécaniquement la structure, notamment vis-à-vis des déformations par flexion et/ou torsion.

### Résumé de l'invention

A cette fin, selon un premier aspect, la présente invention a pour objet un système de rigidification d'une structure, comportant :
- au moins une paire de tirants, notamment au moins deux paires de tirants, chaque tirant de la paire ou des paires de tirants comportant une première extrémité fixée à la structure et une deuxième extrémité,
- au moins un dispositif de mise en tension des tirants comportant :
   - un élément de liaison déformable fixé à la deuxième extrémité de chaque tirant de manière à relier les tirants,
   - un actionneur configuré pour déformer l'élément de liaison de façon à l'amener à passer d'une configuration inactive dans laquelle les tirants sont dans un premier état de tension à une configuration active dans laquelle les tirants sont dans un deuxième état de tension, différent du premier état de tension.

Ainsi, l'élément de liaison est dans ladite configuration inactive avant déformation par l'actionneur et dans ladite configuration active après déformation par l'actionneur.

La déformation de l'élément de liaison permet le passage d'un premier état de tension des tirants à un deuxième état de tension, différent du premier. Il est ainsi possible de modifier la tension dans les tirants de manière simple et reproductible.

De préférence, le deuxième état de tension correspond à un état de tension en traction des tirants.

De préférence, la tension en traction dans les tirants est plus élevée dans le deuxième état de tension par rapport au premier état de tension. Ainsi, le système selon l'invention peut permettre la mise en tension en traction des tirants par déformation de l'élément de liaison (i.e. passage de la configuration inactive à la configuration active), de manière à renforcer mécaniquement la structure.

Le premier état de tension peut correspondre à un état dans lequel aucune tension n'est appliquée aux tirants ou un état de légère tension en compression des tirants.

Cet état de légère tension en compression des tirants peut conduire au flambement des tirants.

Ce premier état de tension peut permettre de faciliter le montage des tirants sur la structure et l'élément de liaison.

Le deuxième état de tension peut être prédéterminé. Cela signifie que le deuxième état de tension peut correspondre à une valeur prédéterminée de tension en traction des tirants, notamment suffisante pour assurer le renforcement mécanique de la structure. Ainsi, le système selon l'invention peut permettre de quantifier la tension en traction appliquée aux tirants.

De préférence, l'un des tirants de la paire de tirants est fixé par sa deuxième extrémité en un premier point de fixation de l'élément de liaison et l'autre tirant de la paire de tirants est fixé par sa deuxième extrémité en un deuxième point de fixation de l'élément de liaison.

La déformation de l'élément de liaison lors de son passage de la configuration inactive à la configuration active entraine de préférence un raccourcissement de la distance entre les premier et deuxième points de fixation de l'élément de liaison, cette distance étant mesurée le long d'une droite passant par les premier et deuxième points de fixation de l'élément de liaison. Une telle déformation de l'élément de liaison permet d'appliquer un effort de traction sur chaque tirant de la paire de tirants.

L'élément de liaison peut être plastiquement déformable et l'actionneur peut être configuré pour déformer plastiquement l'élément de liaison.

L'élément de liaison peut être élastiquement déformable et l'actionneur peut être configuré pour déformer élastiquement l'élément de liaison.

L'actionneur peut être configuré pour exercer une contrainte sur l'élément de liaison pour le déformer et ainsi l'amener à passer de la configuration inactive à la configuration active. Dans ce cas, l'élément de liaison peut être plastiquement ou élastiquement déformable.

L'actionneur peut être en outre configuré pour relâcher la contrainte exercée sur l'élément de liaison pour lui permettre de revenir dans son état initial, i.e. avant déformation, et ainsi l'amener à passer de la configuration active à la configuration inactive. Dans ce cas, l'élément de liaison est de préférence élastiquement déformable et l'actionneur est de préférence configuré pour déformer élastiquement l'élément de liaison.

La contrainte exercée par l'actionneur sur l'élément de liaison peut être un serrage de l'élément de liaison, notamment contre l'actionneur.

L'élément de liaison peut être réalisé dans tout type de matériau déformable par l'actionneur.

L'élément de liaison est par exemple dans un matériau métallique, de préférence en acier ou en inox.

L'épaisseur de l'élément de liaison peut être comprise entre 2 et 4 mm.

De préférence, le matériau et/ou l'épaisseur de l'élément de liaison sont choisis de façon à conférer à l'élément de liaison une ductilité suffisante pour permettre sa déformation sans cassure.

L'élément de liaison s'étend de préférence dans un premier plan et est déformable dans un second plan, perpendiculaire au premier plan.

Chaque tirant de la paire ou des paires de tirants s'étend de préférence dans le même plan que l'élément de liaison (i.e. le premier plan) ou dans un plan parallèle.

Les tirants de la paire ou de chaque paire de tirants peuvent être situés dans le prolongement l'un de l'autre.

Les tirants de la paire ou de chaque paire de tirants sont de préférence alignés.

Chaque tirant de la paire ou des paires de tirants est de préférence rigide.

Chaque tirant de la paire ou des paires de tirants peut être dans un matériau métallique, par exemple en acier ou en inox.

Chaque tirant de la paire ou des paires de tirants peut comporter un corps, par exemple une barre métallique rigide, s'étendant selon l'axe longitudinal du tirant, ledit corps étant pourvu de ladite première extrémité qui est fixée à la structure et de ladite deuxième extrémité qui est fixée à l'élément de liaison.

L'élément de liaison peut comporter une paire de bras, les bras comportant notamment des extrémités proximales reliées au centre de l'élément de liaison et des extrémités distales comportant les points de fixation.

Les bras de la paire de bras de l'élément de liaison peuvent être situés dans le prolongement l'un de l'autre.

Les bras de la paire de bras de l'élément de liaison sont de préférence alignés.

Chaque bras de la paire de bras de l'élément de liaison peut être une plaque, ayant notamment une forme générale triangulaire, avec par exemple un sommet du triangle en tant qu'extrémité proximale du bras reliée audit centre de l'élément de liaison et un côté opposé audit sommet en tant qu'extrémité distale du bras comportant ledit point de fixation.

Le système peut comporter au moins deux paires de tirants, chaque tirant comportant de préférence une première extrémité fixée à la structure et une deuxième extrémité fixée à l'élément de liaison.

Il est particulièrement avantageux d'avoir au moins deux paires de tirants dans le système car chaque tirant est fixé à un même élément de liaison déformable. Ainsi, la déformation de l'élément de liaison peut permettre de modifier simultanément et uniformément l'état de tension dans l'ensemble des tirants, et en particulier de mettre en tension simultanément et uniformément l'ensemble des tirants. En outre, une seule opération, i.e. la déformation de l'élément de liaison, permet d'agir sur l'ensemble des tirants. Le système selon la présente invention permet ainsi de rigidifier la structure de manière simple, en un temps réduit, et en maitrisant précisément la tension appliquée dans l'ensemble des tirants.

Lorsque le système comporte deux paires de tirants, les tirants sont de préférence disposés en étoile autour de l'élément de liaison.

L'élément de liaison comporte de préférence un nombre de bras égal au nombre de tirants du système. Chaque bras peut comporter un point de fixation de manière à ce que l'élément de liaison comporte un nombre de points de fixation égal au nombre de tirants du système. Cela permet à ce que chaque tirant soit fixé à l'élément de liaison par sa deuxième extrémité.

Par exemple, lorsque le système comporte deux paires de tirants, l'élément de liaison comporte deux paires de bras, qui sont de préférence disposés en étoile autour du centre de l'élément de liaison.

A titre d'exemple, le système peut comporter trois ou quatre paires de tirants, chaque tirant comportant de préférence une première extrémité fixée à la structure et une deuxième extrémité fixée à l'élément de liaison.

L'actionneur peut être actionné de manière motorisée ou manuelle.

L'actionneur peut être configuré pour déformer l'élément de liaison par serrage de l'élément de liaison contre l'actionneur.

Le serrage peut être effectué par vissage ou tout autre moyen adapté.

L'actionneur peut comporter un support de serrage et être notamment configuré pour déformer l'élément de liaison par serrage de l'élément de liaison en appui sur le support de serrage.

Cela peut permettre de déformer l'élément de liaison de manière contrôlée en contrôlant la force de serrage appliquée sur l'élément de liaison. Il est par exemple possible d'appliquer une force de serrage prédéterminée de façon à obtenir un deuxième état de tension prédéterminé.

L'utilisation du support de serrage peut permettre à l'élément de liaison de se déformer en épousant la forme du support de serrage. Un tel support de serrage peut ainsi permettre de déformer l'élément de liaison de manière guidée par rapport au support de serrage.

Le support de serrage présente de préférence une rigidité suffisante pour ne pas se déformer lorsque l'on applique une force de serrage sur l'élément de liaison de manière à le déformer.

Le couple de serrage exercé par l'actionneur est de préférence prédéterminé.

Le support de serrage peut se présenter sous la forme d'une plaque comportant en son centre une concavité.

Le sommet de la concavité peut comporter un orifice.

L'élément de liaison peut comporter en son centre un orifice.

Le support de serrage peut être configuré pour se superposer sur l'élément de liaison, de préférence de façon à ce que la concavité du support de serrage soit orientée vers l'élément de liaison et de façon à ce que l'orifice du support de serrage soit situé en vis-à-vis de l'orifice de l'élément de liaison.

De préférence, la surface du support de serrage en regard de l'élément de liaison ne comporte aucune arrête vive. Cela permet de limiter voire d'éliminer le risque de cassure de l'élément de liaison au cours de sa déformation.

L'actionneur peut outre comporter un ensemble vis de serrage-écrou, et les orifices du support de serrage et de l'élément de liaison situés en vis-à-vis sont de préférence destinés à recevoir ledit ensemble vis de serrage-écrou.

Lors du serrage de l'ensemble vis de serrage-écrou, l'élément de liaison se déforme en épousant la forme de la concavité du support de serrage.

L'écrou peut venir en appui contre l'élément de liaison.

Avantageusement, l'actionneur peut être en outre configuré pour amener l'élément de liaison à passer de la configuration active dans laquelle les tirants sont dans le deuxième état de tension à la configuration inactive dans laquelle les tirants sont dans le premier état de tension.

Cela peut permettre à l'élément de liaison de revenir dans sa configuration inactive, i.e. sa configuration avant déformation.

Lorsque la tension en traction dans les tirants est plus élevée dans le deuxième état de tension par rapport au premier état de tension, l'actionneur peut ainsi permettre de mettre en tension en traction les tirants (i.e. l'élément de liaison passe de la configuration inactive à active) pour rigidifier la structure, mais aussi de réduire la tension en traction dans les tirants (i.e. l'élément de liaison passe de la configuration active à inactive), de manière par exemple à faciliter le démontage de la structure.

Par exemple, l'élément de liaison est élastiquement déformable et l'actionneur est configuré pour déformer élastiquement l'élément de liaison en exerçant une contrainte sur l'élément de liaison de façon à l'amener à passer de la configuration inactive à la configuration active. Dans cet exemple, l'actionneur est également configuré pour relâcher la contrainte exercée sur l'élément de liaison pour lui permettre de revenir dans son état initial, i.e. avant déformation, et ainsi l'amener à passer de la configuration active à la configuration inactive. Dans cet exemple, l'élément de liaison peut revenir dans la configuration inactive, par simple relâchement de la contrainte exercée par l'actionneur sur l'élément de liaison, puisque la déformation subie par l'élément de liaison lors de son passage de la configuration inactive à la configuration active est réversible, i.e. non permanente.

La structure peut être une structure de soutien, en particulier une structure en treillis.

La structure de soutien peut être métallique.

La structure de soutien est par exemple une poutre à treillis, en particulier une poutre à treillis rigide.

La structure de soutien peut comporter des longerons et des traverses.

Dans un mode de réalisation préféré, la structure de soutien comporte au moins deux longerons s'étendant parallèlement entre eux selon une direction principale d'extension et au moins deux traverses pour relier mécaniquement les longerons entre eux, et le système de rigidification selon l'invention comporte deux paires de tirants. Les tirants sont disposés en étoile autour de l'élément de liaison. Chaque tirant comporte une première extrémité fixée à l'un des longerons et à l'une des traverses, et une deuxième extrémité fixée à l'élément de liaison. Les tirants sont agencés de manière à relier les longerons entre eux et les traverses entre elles.

La présente invention a encore pour objet un procédé de rigidification d'une structure à l'aide d'un système tel que défini ci-dessus, dans lequel on applique sur l'élément de liaison une force de déformation prédéterminée à l'aide de l'actionneur de façon à déformer l'élément de liaison de manière contrôlée et ainsi le faire passer d'une configuration inactive dans laquelle les tirants sont dans un premier état de tension à une configuration active dans laquelle les tirants sont dans un deuxième état de tension prédéterminé, différent du premier état de tension.

De préférence, le deuxième état de tension prédéterminé correspond à un état de tension en traction des tirants.

De préférence, la tension en traction dans les tirants est plus élevée dans le deuxième état de tension par rapport au premier état de tension.

La force de déformation à appliquer sur l'élément de liaison pour le déformer et ainsi le faire passer de la configuration inactive à active est dépendante notamment du deuxième état de tension à atteindre et de la rigidité de l'élément de liaison.

Le deuxième état de tension à atteindre peut dépendre de la longueur de la structure, notamment de la poutre à treillis, à rigidifier.

La présente invention a encore pour objet une structure en treillis comportant :
- au moins deux longerons s'étendant parallèlement entre eux selon une direction principale d'extension,
- une pluralité de traverses réparties le long de la direction principale d'extension pour relier entre eux les longerons,
- une pluralité de tirants disposés de sorte à relier entre elles les traverses adjacentes,
au moins deux traverses adjacentes comportant entre elles un système de rigidification tel que défini plus haut.

La structure en treillis peut être une poutre à treillis, en particulier une poutre à treillis rigide.

La structure en treillis peut être métallique.

De préférence, le système de rigidification entre deux traverses adjacentes comporte deux paires de tirants.

De préférence, les traverses sont parallèles entre elles.

De préférence, la structure forme entre deux traverses adjacentes un quadrilatère. Le quadrilatère peut comporter deux côtés opposés correspondant à deux traverses adjacentes et deux côtés opposés correspondant aux portions de longerons s'étendant entre lesdites traverses adjacentes.

De préférence, les tirants reliant deux traverses adjacentes s'étendent selon la direction des diagonales du quadrilatère.

Ainsi, la structure peut comporter une pluralité de quadrilatères répartis le long de la direction principale d'extension, chaque quadrilatère comportant des tirants qui s'étendent de préférence selon les diagonales du quadrilatère.

De préférence, les traverses s'étendent dans une direction perpendiculaire à la direction principale d'extension. Ainsi, la structure peut comporter une pluralité de carrés ou rectangles répartis le long de la direction principale d'extension, chaque carré ou rectangle comportant des tirants qui s'étendent de préférence selon les diagonales du carré ou rectangle.

De préférence, au moins certaines traverses sont mobiles en translation dans les deux sens le long de la direction principale d'extension par rapport aux longerons et au moins certaines traverses sont fixes par rapport aux longerons.

Les traverses mobiles sont de préférence fixées aux longerons par des systèmes de fixation tels que par exemple des systèmes vis/écrou reçus dans des trous oblongs ménagés dans les longerons. Ces trous oblongs, et notamment un serrage adapté des systèmes vis/écrou, permettent le mouvement en translation des traverses mobiles le long de la direction principale d'extension.

Les traverses fixes sont de préférence fixées aux longerons par des systèmes de fixation tels que par exemple des systèmes vis/écrou ou rivets reçus dans des trous circulaires ménagés dans les longerons. Ces trous circulaires ne permettent pas la mobilité des traverses par rapport aux longerons.

La structure en treillis peut être supportée par au moins deux arceaux de support. Par exemple, la structure en treillis, et en particulier les longerons de la structure en treillis, sont fixées aux extrémités des arceaux de support.

De préférence, la structure en treillis comporte des traverses fixes au niveau de ses extrémités et au niveau de la zone de fixation des arceaux. Ainsi, la structure en treillis peut comporter au moins quatre traverses fixes.

La structure en treillis comporte de préférence, entre deux traverses fixes adjacentes, au moins un quadrilatère comportant le système de rigidification tel que défini plus haut, de préférence centré par rapport aux deux traverses fixes adjacentes.

La structure en treillis comporte de préférence, entre deux traverses fixes adjacentes qui sont situées à une extrémité de la structure et au niveau de la zone de fixation d'un arceau, un quadrilatère comportant le système de rigidification tel que défini plus haut.

La structure en treillis comporte de préférence, entre deux traverses fixes adjacentes qui sont situées au niveau des zones de fixation des arceaux, un, deux voire trois quadrilatères comportant le système de rigidification tel que défini plus haut.

La mise en tension des tirants des quadrilatères comportant le système de rigidification tel que défini plus haut permet d'entrainer en translation les traverses mobiles le long de direction principale d'extension et permet ainsi de rigidifier l'ensemble de la structure en treillis.

Ainsi, la structure en treillis selon l'invention est particulièrement avantageuse car elle peut être rigidifiée dans son ensemble en mettant en tension uniquement les tirants des quadrilatères comportant le système de rigidification tel que défini plus haut. Il n'est alors plus nécessaire de mettre en tension un à un les tirants de chaque quadrilatère de la structure. Cela permet de diminuer significativement le temps de montage en réduisant le nombre d'opération de mise en tension de tirant.

En outre, l'utilisation dans certains quadrilatères de la structure du système de rigidification tel que défini plus haut avec deux paires de tirants permet de mettre en tension les deux paires de tirants en même temps, ce qui permet de limiter un possible arc-boutement des traverses mobiles.

Après rigidification de la structure dans son ensemble, le serrage des systèmes de fixation, notamment vis/écrou, des traverses mobiles sur les longerons est repris de façon à ce que ces traverses mobiles ne puissent plus se translater le long de la direction principale d'extension.

La structure en treillis peut comporter deux, trois ou quatre longerons s'étendant parallèlement entre eux selon une direction principale d'extension. Les longerons adjacents peuvent être relier deux à deux par des traverses telles que décrites ci-dessus. Les traverses adjacentes reliant deux longerons adjacents peuvent être reliées entre elle par des tirants tels que décrits ci-dessus.

La présente invention a encore pour objet un suiveur solaire comportant :
- au moins une structure en treillis telle que définie ci-dessus, notamment une poutre à treillis, s'étendant longitudinalement selon une direction principale d'extension,
- au moins une table supportée par la structure en treillis, la table étant équipée d'au moins un dispositif de collecte d'énergie solaire, la table s'étendant longitudinalement selon la direction principale d'extension,
- au moins deux arceaux de support mobiles en rotation autour d'un axe de rotation s'étendant le long de la direction principale d'extension, les arceaux étant montés sur la structure en treillis de façon à entrainer en rotation la structure en treillis autour de l'axe de rotation des arceaux.

La table est de préférence équipée d'une pluralité de panneaux solaires dans un même plan.

La structure en treillis est de préférence suffisamment rigide pour supporter la table.

Les arceaux de support supportent de préférence la structure en treillis.

Le suiveur solaire peut comporter en outre un système d'entrainement configuré pour entrainer en rotation les arceaux autour de l'axe de rotation des arceaux.

La présente invention a encore pour objet un champ solaire comportant une pluralité de suiveurs solaires tels que définis ci-dessus.

Au moins certains suiveurs solaires peuvent être disposés parallèlement les uns aux autres, notamment selon la direction Nord/Sud.

La présente invention a encore pour objet une structure en treillis comportant :
- au moins deux longerons s'étendant parallèlement entre eux selon une direction principale d'extension,
- une pluralité de traverses réparties le long de la direction principale d'extension pour relier entre eux les longerons,
- une pluralité de tirants disposés de sorte à relier entre elles les traverses adjacentes,
au moins certaines traverses étant mobiles en translation dans les deux sens le long de la direction principale d'extension par rapport aux longerons et au moins certaines traverses étant fixes par rapport aux longerons.

La structure en treillis peut être une poutre à treillis, en particulier une poutre à treillis rigide.

La structure en treillis peut être métallique.

De préférence, les traverses sont parallèles entre elles.

De préférence, la structure forme entre deux traverses adjacentes un quadrilatère. Le quadrilatère peut comporter deux côtés opposés correspondant à deux traverses adjacentes et deux côtés opposés correspondant aux portions de longerons s'étendant entre lesdites traverses adjacentes.

De préférence, les tirants reliant deux traverses adjacentes s'étendent selon la direction des diagonales du quadrilatère.

Ainsi, la structure peut comporter une pluralité de quadrilatères répartis le long de la direction principale d'extension, chaque quadrilatère comportant des tirants qui s'étendent de préférence selon les diagonales du quadrilatère.

De préférence, les traverses s'étendent dans une direction perpendiculaire à la direction principale d'extension. Ainsi, la structure peut comporter une pluralité de carrés ou rectangles répartis le long de la direction principale d'extension, chaque carré ou rectangle comportant des tirants qui s'étendent de préférence selon les diagonales du carré ou rectangle.

Les traverses mobiles sont de préférence fixées aux longerons par des systèmes de fixation tels que par exemple des systèmes vis/écrou reçus dans des trous oblongs ménagés dans les longerons. Ces trous oblongs, et notamment un serrage adapté des systèmes vis/écrou, permettent le mouvement en translation des traverses mobiles le long de la direction principale d'extension par rapport aux longerons.

Les traverses fixes sont de préférence fixées aux longerons par des systèmes de fixation tels que par exemple des systèmes vis/écrou ou rivets reçus dans des trous circulaires ménagés dans les longerons. Ces trous circulaires ne permettent pas la mobilité des traverses par rapport aux longerons.

La structure en treillis peut être supportée par au moins deux arceaux de support. Par exemple, la structure en treillis, et en particulier les longerons de la structure en treillis, sont fixées aux extrémités des arceaux de support.

De préférence, la structure en treillis comporte des traverses fixes au niveau de ses extrémités et au niveau de la zone de fixation des arceaux. Ainsi, la structure en treillis peut comporter au moins quatre traverses fixes.

La structure en treillis peut comporter, entre deux traverses fixes adjacentes, au moins un quadrilatère comportant un système de mise en tension des tirants, de préférence centré par rapport aux deux traverses fixes adjacentes.

La structure en treillis comporte de préférence, entre deux traverses fixes adjacentes qui sont situées au niveau des zones de fixation des arceaux, un ou plusieurs quadrilatères comportant un système de mise en tension des tirants.

La structure en treillis comporte de préférence, entre deux traverses fixes adjacentes qui sont situées au niveau d'une extrémité de la structure et au niveau d'une zone de fixation d'un arceau, un quadrilatère comportant un système de mise en tension des tirants.

Le système de mise en tension des tirants peut être tout système permettant la mise en tension des tirants, tels que par exemple des systèmes de filetage / écrou en bout de tirant, des ridoirs, etc.

La mise en tension des tirants des quadrilatères comportant un système de mise en tension des tirants permet d'entrainer en translation les traverses mobiles le long de direction principale d'extension et permet ainsi de rigidifier l'ensemble de la structure en treillis.

Ainsi, la structure en treillis selon l'invention est particulièrement avantageuse car elle peut être rigidifiée dans son ensemble en mettant en tension uniquement les tirants des quadrilatères comportant un système de mise en tension des tirants. Il n'est alors plus nécessaire de mettre en tension un à un les tirants de chaque quadrilatère de la structure. Cela permet de diminuer significativement le temps de montage en réduisant le nombre d'opération de mise en tension de tirant.

Après rigidification de la structure dans son ensemble, le serrage des systèmes de fixation, notamment vis/écrou, des traverses mobiles sur les longerons est repris de façon à ce que ces traverses mobiles ne puissent plus se translater le long de la direction principale d'extension.

La structure en treillis peut comporter deux, trois ou quatre longerons s'étendant parallèlement entre eux selon une direction principale d'extension. Les longerons adjacents peuvent être reliés deux à deux par des traverses telles que décrites ci-dessus. Les traverses adjacentes reliant deux longerons adjacents peuvent être reliées entre elle par des tirants tels que décrits ci-dessus.

La présente invention a encore pour objet un suiveur solaire comportant :
- au moins une structure en treillis comportant au moins deux longerons s'étendant parallèlement entre eux selon une direction principale d'extension, une pluralité de traverses réparties le long de la direction principale d'extension pour relier entre eux les longerons, une pluralité de tirants disposés de sorte à relier entre elles les traverses adjacentes, au moins certaines traverses étant mobiles en translation dans les deux sens le long de la direction principale d'extension par rapport aux longerons et au moins certaines traverses étant fixes par rapport aux longerons.
- au moins une table supportée par la structure en treillis, la table étant équipée d'au moins un dispositif de collecte d'énergie solaire, la table s'étendant longitudinalement selon la direction principale d'extension,
- au moins deux arceaux de support mobiles en rotation autour d'un axe de rotation s'étendant le long de la direction principale d'extension, les arceaux étant montés sur la structure en treillis de façon à entrainer en rotation la structure en treillis autour de l'axe de rotation des arceaux.

La structure en treillis peut présenter en outre une ou plusieurs caractéristiques telles que définies ci-dessus.

La table est de préférence équipée d'une pluralité de panneaux solaires dans un même plan.

La structure en treillis est de préférence suffisamment rigide pour supporter la table.

Les arceaux de support supportent de préférence la structure en treillis.

Le suiveur solaire peut comporter en outre un système d'entrainement configuré pour entrainer en rotation les arceaux autour de l'axe de rotation des arceaux.

La présente invention a encore pour objet un champ solaire comportant une pluralité de suiveurs solaires tels que définis ci-dessus.

Au moins certains suiveurs solaires peuvent être disposés parallèlement les uns aux autres, notamment selon la direction Nord/Sud.

### Brève description des dessins

L'invention pourra être mieux comprise à la lecture de la description détaillée qui va suivre, d'un exemple de mise en œuvre non limitatif de celle-ci, et à l'examen du dessin annexé, sur lequel :
[Fig. 1] la figure 1 représente de façon schématique, en vue de dessus, un exemple de système de rigidification d'une structure selon l'invention,
[Fig. 2a] la figure 2a représente de façon schématique, en vue de dessus, une vue partielle du système de rigidification de la figure 1 dans lequel l'élément de liaison est dans une configuration inactive,
[Fig. 2b] la figure 2b représente de façon schématique, en vue de dessus, une vue partielle du système de rigidification de la figure 1 dans lequel l'élément de liaison est dans une configuration active,
[Fig. 3a] la figure 3a représente de façon schématique un exemple de dispositif de mise en tension des tirants selon l'invention dans lequel l'élément de liaison est dans une configuration inactive,
[Fig. 3b] la figure 3b représente de façon schématique le dispositif de mise en tension des tirants représenté à la figure 3a dans lequel l'élément de liaison est dans une configuration active,
[Fig. 4a] la figure 4a représente de façon schématique et en perspective un autre exemple de système de rigidification d'une structure selon l'invention,
[Fig. 4b] la figure 4b représente de façon schématique et en perspective une autre vue du système de rigidification d'une structure représenté à la figure 4a,
[Fig. 4c] la figure 4c représente de façon schématique et en perspective une autre vue du système de rigidification d'une structure représenté aux figures 4a et 4b sur laquelle l'actionneur et l'élément de liaison sont représentés en coupe transversale,
[Fig. 4d] la figure 4d représente de façon schématique et en perspective le dispositif de mise en tension des tirants du système de rigidification d'une structure représenté aux figures 4a, 4b et 4c dans lequel l'élément de liaison est dans une configuration active,
[Fig. 5] la figure 5 représente de façon schématique, en vue de dessus, un exemple de structure en treillis selon l'invention,
[Fig. 6a] la figure 6a représente, de façon schématique et en perspective, un détail de la structure en treillis représentée à la figure 5,
[Fig. 6b] la figure 6b représente, de façon schématique et en perspective, un détail du longeron de la structure en treillis représentée à la figure 6a,
[Fig. 7a] la figure 7a représente, de façon schématique et en perspective, un autre détail de la structure en treillis représentée à la figure 5, et
[Fig. 7b] la figure 7b représente un détail du longeron de la structure en treillis représentée à la figure 7a.

### Description de mode(s) de réalisation

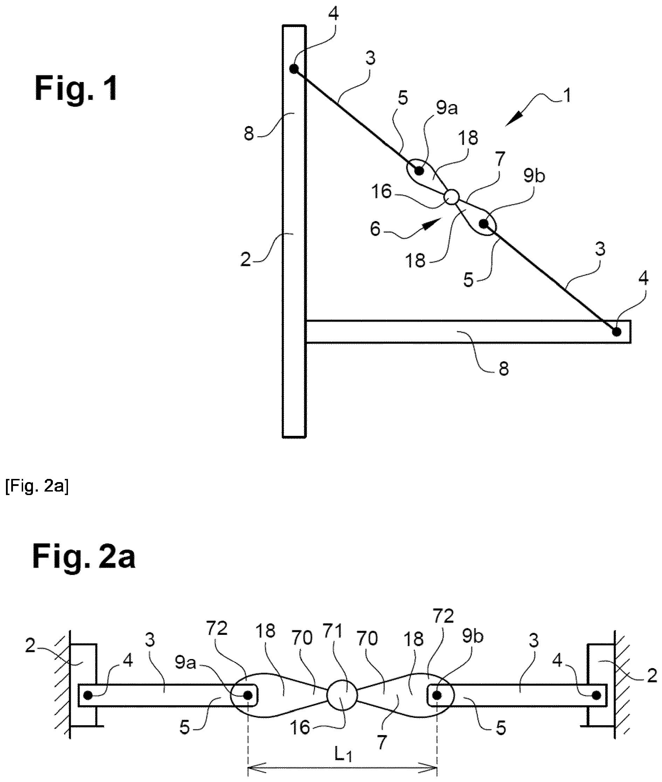

On a illustré à la figure 1 un exemple de système 1 de rigidification d'une structure 2 selon l'invention. Dans cet exemple, la structure 2 comporte deux parois 8 perpendiculaires.

Le système 1 comporte dans cet exemple une paire de tirants 3, chaque tirant 3 de la paire de tirants 3 comportant une première extrémité 4 fixée à la structure 2 et une deuxième extrémité 5. Les tirants 3 sont situés dans le prolongement l'un de l'autre et sont alignés.

Le système 1 comporte en outre un dispositif 6 de mise en tension des tirants 3 comportant un élément de liaison déformable 7 fixé à la deuxième extrémité 5 de chaque tirant 3 de manière à relier les tirants 3 entre eux.

L'un des tirants 3 de la paire de tirants 3 est fixé par sa deuxième extrémité 5 en un premier point de fixation 9a de l'élément de liaison 7 et l'autre tirant 3 de la paire de tirants 3 est fixé par sa deuxième extrémité 5 en un deuxième point de fixation 9b de l'élément de liaison 7.

L'élément de liaison 7 est apte à se déformer de façon à passer d'une configuration inactive dans laquelle les tirants 3 sont dans un premier état de tension à une configuration active dans laquelle les tirants 3 sont dans un deuxième état de tension, différent du premier état de tension.

On a illustré à la figure 2a, l'élément de liaison 7 dans une configuration inactive dans laquelle les tirants 3 sont dans un premier état de tension. Dans cette configuration inactive, l'élément de liaison 7 n'est pas déformé et les tirants 3 ne sont pas en tension. Les premier 9a et deuxième 9b points de fixation sont séparés d'une distance L₁.

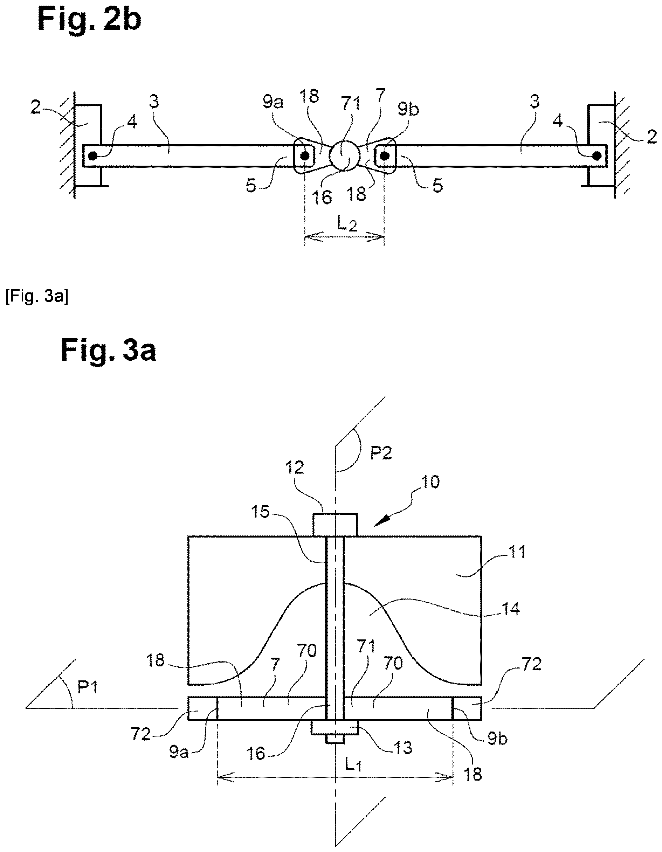

On a illustré à la figure 2b, l'élément de liaison 7 dans une configuration active dans laquelle les tirants 3 sont dans un deuxième état de tension.

Dans cette configuration active, l'élément de liaison 7 est déformé et les tirants 3 sont en tension. Les premier 9a et deuxième 9b points de fixation sont séparés d'une distance L₂, avec L₂ < L₁.

Ainsi, dans ce deuxième état de tension, la tension en traction dans les tirants 3 est plus élevée que dans le premier état de tension.

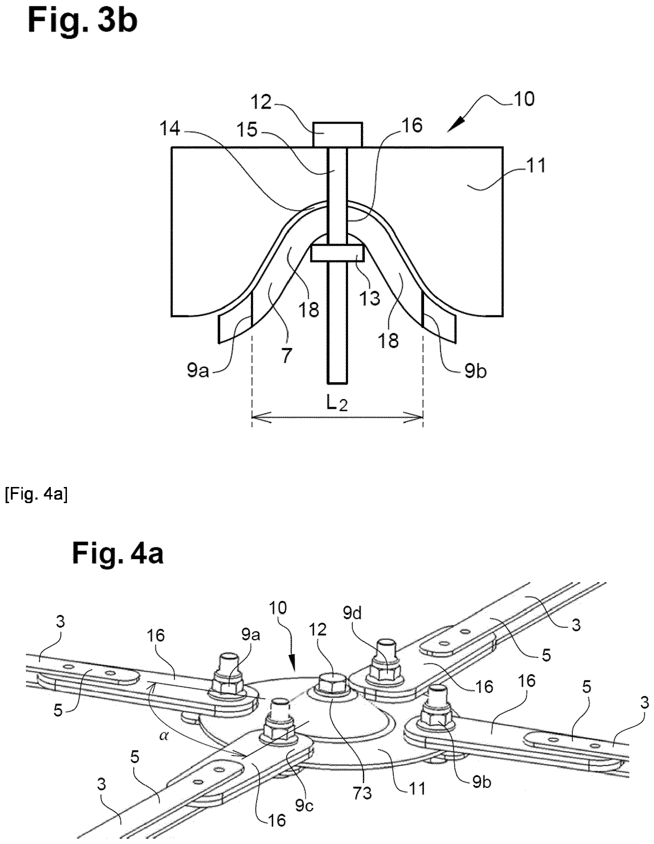

On a illustré aux figures 3a et 3b un actionneur 10 configuré pour déformer l'élément de liaison 7 de façon à l'amener à passer d'une configuration inactive (figure 3a) à une configuration active (figure 3b).

L'élément de liaison 7 s'étend dans un premier plan P1 et est déformable dans un second plan P2, perpendiculaire au premier plan P1.

L'actionneur 10 comporte un support de serrage 11 sur lequel vient prendre appui l'élément de liaison 7. Le support de serrage 11 comporte une concavité 14 orientée vers l'élément de liaison 7.

Le support de serrage 11 comporte au niveau du sommet de la concavité 14 un orifice 15.

L'élément de liaison comporte quant à lui un orifice 16 situé en vis-à-vis de l'orifice 15 du support de serrage 11.

L'actionneur comporte en outre un ensemble vis de serrage 12 / écrou 13, et les orifices 15, 16 du support de serrage 11 et de l'élément de liaison 7 reçoivent ledit ensemble vis de serrage 12 / écrou 13.

Lors du serrage de l'ensemble vis de serrage 12 / écrou 13, l'élément de liaison 7 se déforme en épousant la forme de la concavité 14 du support de serrage 11, comme illustré à la figure 3b. Cela entraine un raccourcissement de la distance entre les premier 9a et deuxième 9b points de fixation de l'élément de liaison et ainsi une mise en tension des tirants 3.

L'actionneur 10 est dans cet exemple amovible, c'est-à-dire qu'il sert à déformer l'élément de liaison 7 de façon à l'amener de la configuration inactive à active puis peut être désolidarisé de l'élément de liaison 7 après déformation.

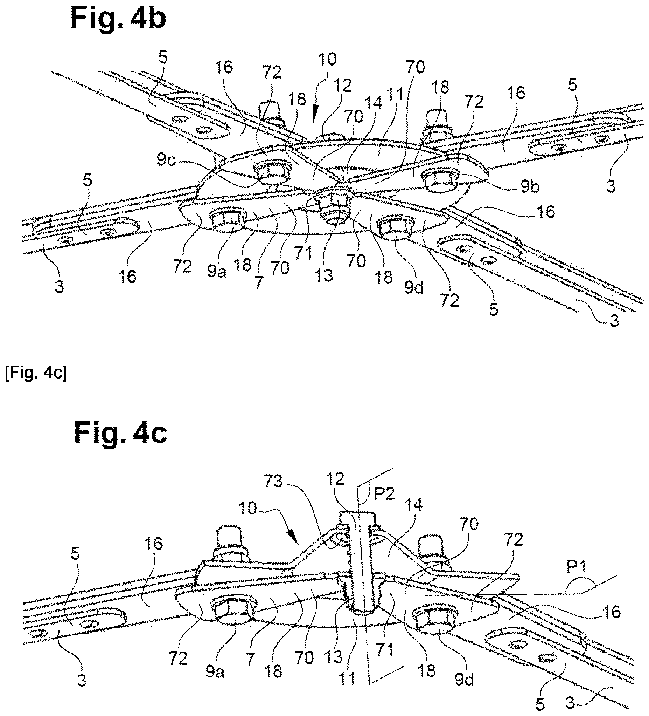

On a illustré aux figures 4a à 4d, un autre exemple de système 1 de rigidification d'une structure 2 selon l'invention.

L'élément de liaison 7 s'étend dans un premier plan P1 et est déformable dans un second plan P2, perpendiculaire au premier plan P1.

Chaque tirant 3 de la paire de tirants 3 s'étend dans le même plan que l'élément de liaison 7 ou dans un plan parallèle.

Dans cet exemple, le système 1 comporte deux paires de tirants 3, chaque tirant 3 comportant une première extrémité 4 (non représentée) fixée à la structure 2 et une deuxième extrémité 5 fixée à l'élément de liaison 7.

Dans cet exemple, l'actionneur 10 n'est pas amovible. Il est fixé à la fois aux tirants 3 et à l'élément de liaison 7.

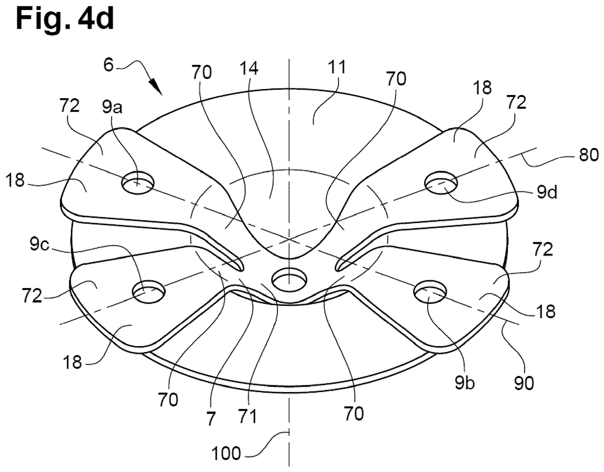

Les figures 4a à 4c illustrent le dispositif 6 de mise en tension des tirants 3 avec l'élément de liaison 7 dans sa configuration inactive (i.e. avant déformation) et la figure 4d illustre le dispositif 6 avec l'élément de liaison 7 dans sa configuration active (i.e. après déformation).

Les tirants 3 de chaque paire de tirants 3 sont disposés en étoile autour de l'élément de liaison 7.

Chaque paire de tirants 3 comporte deux tirants 3 alignés.

L'angle α entre deux tirants adjacents est supérieure ou égale à 40° et inférieure ou égale à 140°.

La deuxième extrémité 5 de chaque tirant 3 se prolonge par une platine 16 sur laquelle le tirant 3 et fixé par rivetage. La platine 16 est quant à elle fixée à la fois au support de serrage 11 et à l'élément de liaison 7 par un système vis/écrou. L'utilisation d'une telle platine 16 permettant de relier la deuxième extrémité 5 d'un tirant 3 à la fois au support de serrage 11 et à l'élément de liaison 7 est optionnel. En effet, il est possible de fixer la deuxième extrémité 5 de chaque tirant 3 directement au support de serrage 11 et à l'élément de liaison 7.

Le support de serrage 11 est pris en sandwich entre les tirants 3 et l'élément de liaison 7.

Le support de serrage 11 se présente sous la forme d'une plaque comportant en son centre 73 une concavité 14 orientée vers l'élément de liaison 7. La concavité 14 peut présenter une forme parabolique, hyperbolique ou encore elliptique.

Le support de serrage 11 comporte des orifices permettant sa fixation aux platines 16 et à l'élément de liaison par le système vis/écrou. Ces orifices sont de forme oblongue de manière à permettre le mouvement des tirants vers le centre 73 du support de serrage 11.

L'élément de liaison 7 comporte deux paires de bras 18.

Les bras 18 sont disposés en étoile autour du centre 71 de l'élément de liaison 7.

Chaque bras 18 de l'élément de liaison 7 est fixé sur la deuxième extrémité 5 d'un tirant 3.

Chaque bras 18 s'étend selon l'axe longitudinal du tirant 3 auquel il est fixé ou selon un axe qui s'étend avec une légère déviation, par exemple de l'ordre de plus ou moins 10°, par rapport à l'axe longitudinal du tirant 3 auquel il est fixé.

De préférence, chaque bras 18 s'étend selon l'axe longitudinal du tirant 3 auquel il est fixé.

Le serrage de l'ensemble vis de serrage 12 / écrou 13 de l'actionneur 10 permet de déformer l'élément de liaison 7 et donc de mettre en tension l'ensemble des tirants 3.

Sur la figure 4d qui illustre le dispositif 6 avec l'élément de liaison 7 dans sa configuration active (i.e. après déformation), chaque paire de bras 18 de l'élément de liaison 7 s'étend selon un axe longitudinal 80, 90. Les axes longitudinaux 80, 90 sont dans le plan P1 dans lequel s'étend l'élément de liaison 7. L'élément de liaison 7 est déformé selon un axe longitudinal 100 qui est perpendiculaire aux axes 80, 90.

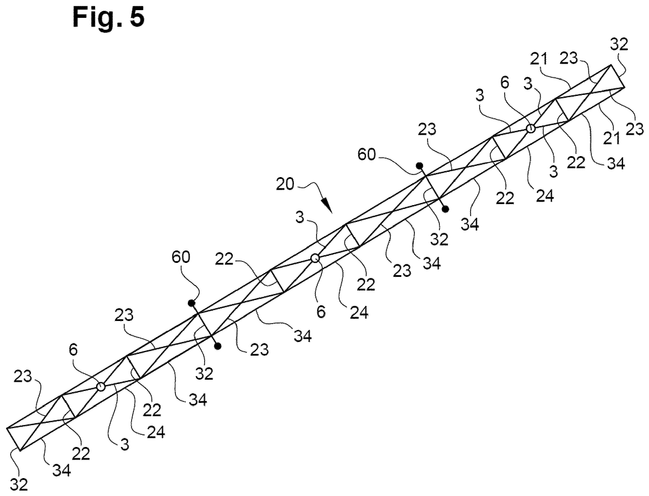

On a illustré à la figure 5 un exemple de structure 20 en treillis selon l'invention.

La structure 20 comporte :
- au moins deux longerons 21 s'étendant parallèlement entre eux selon une direction principale d'extension,
- une pluralité de traverses 22, 32 réparties le long de la direction principale d'extension pour relier entre eux les longerons 21, les traverses 22, 32 s'étendent dans une direction perpendiculaire à la direction principale d'extension et sont parallèles entre elles,
- une pluralité de tirants 3, 23 disposés de sorte à relier entre elles les traverses 22, 32 adjacentes.

La structure 20 comporte au moins deux traverses 22, 32 adjacentes comportant entre elles le système 1 de rigidification selon l'invention, c'est-à-dire au moins deux traverses 22, 32 adjacentes entre lesquelles les tirants sont mis en tension à l'aide du dispositif 6 de mise en tension selon l'invention.

La structure 20 forme entre deux traverses adjacentes un rectangle 24, 34. Le rectangle 24, 34 peut comporter deux côtés opposés correspondant à deux traverses 22, 32 adjacentes et deux côtés opposés correspondant aux portions de longerons 21 s'étendant entre lesdites traverses 22, 32 adjacentes.

Les tirants 3, 23 reliant deux traverses 22, 32 adjacentes s'étendent selon la direction des diagonales du rectangle 24, 34.

La structure 20 comporter ainsi une pluralité de rectangles 24, 34 répartis le long de la direction principale d'extension, chaque rectangle 24, 34 comportant des tirants 3, 23 qui s'étendent selon les diagonales du rectangle 24, 34.

La structure comporte des traverses 22 qui sont mobiles en translation dans les deux sens le long de direction principale d'extension et des traverses 32 qui sont fixes.

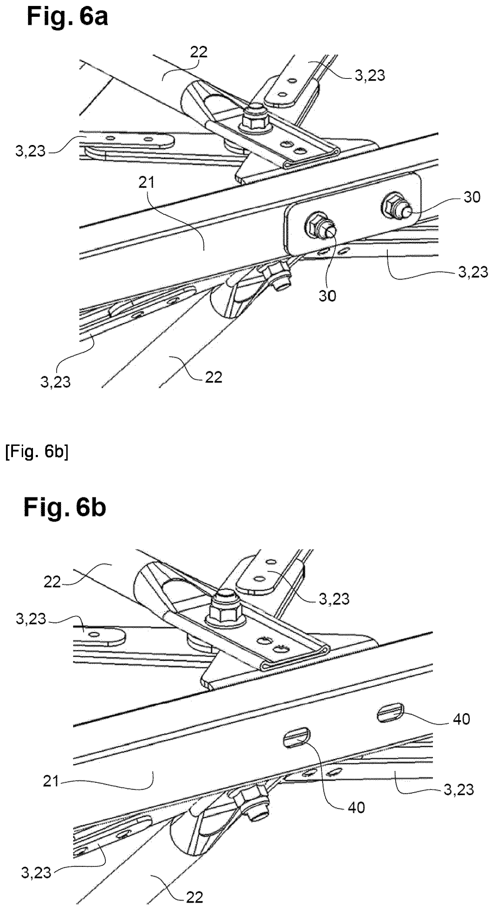

Comme illustré aux figures 6a et 6b, les traverses mobiles 22 sont fixées aux longerons 21 par des systèmes de fixation tels que par exemple des systèmes vis/écrou 30 reçus dans des trous oblongs 40 ménagés dans les longerons 21. Ces trous oblongs 40, et notamment un serrage adapté des systèmes vis/écrou 30, permettent le mouvement en translation des traverses mobiles 22 le long de la direction principale d'extension par rapport aux longerons 21. Ainsi, avant la mise en tension des tirants, le serrage des systèmes vis/écrou 30 est tel qu'il permet le mouvement en translation des traverses mobiles 22 le long de la direction principale d'extension par rapport aux longerons 21.

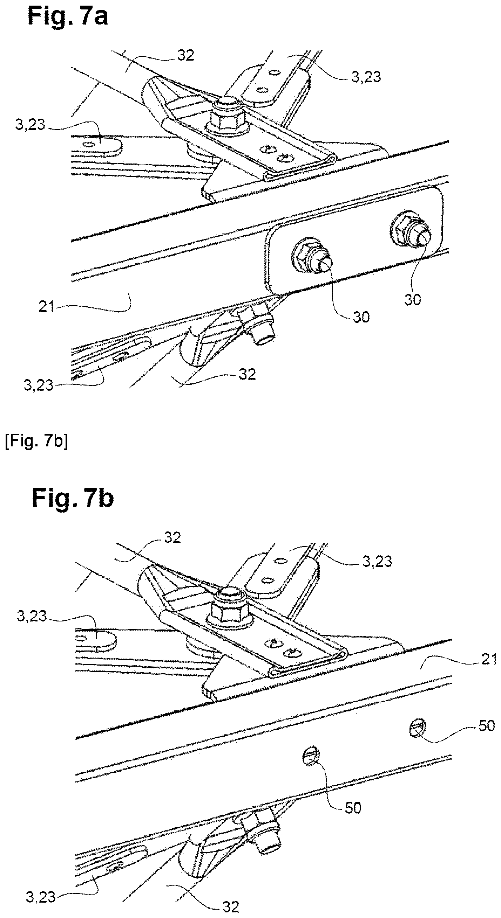

Comme illustré aux figures 7a et 7b, les traverses fixes 32 sont fixées aux longerons 21 par des systèmes de fixation tels que par exemple des systèmes vis/écrou 30 reçus dans des trous circulaires 50 ménagés dans les longerons 21. Ces trous circulaires 50 ne permettent pas la mobilité des traverses 32 par rapport aux longerons 21.

D'autres systèmes de fixation peuvent être utilisés pour fixer les traverses fixes 32 aux longerons 21, tels que par exemple des rivets (non représentés).

La structure 20 en treillis peut être supportée par au moins deux arceaux de support 60. Par exemple, la structure 20 en treillis, et en particulier les longerons 21 de la structure 20 en treillis, sont fixées aux extrémités des arceaux de support 60.

La structure 20 en treillis comporte des traverses fixes 32 au niveau de ses extrémités et au niveau de la zone de fixation des arceaux. Ainsi, la structure en treillis comporte au moins quatre traverses fixes 32.

La structure 20 en treillis comporte entre deux traverses fixes 32 adjacentes, au moins un rectangle 24 dans lequel les tirants 3 sont mis en tension à l'aide du dispositif 6 de mise en tension selon l'invention, de préférence centré par rapport aux deux traverses fixes 32 adjacentes.

La mise en tension des tirants des rectangles 24 dans lesquels les tirants 3 sont mis en tension à l'aide du dispositif 6 de mise en tension selon l'invention permet d'entrainer en translation les traverses mobiles 22 le long de direction principale d'extension et permet ainsi de rigidifier l'ensemble de la structure 20 en treillis.

Ainsi, après la mise en tension des tirants 3 des rectangles 24, l'ensemble de la structure 20 en treillis est rigidifié. Il est alors possible de resserrer les systèmes vis/écrou 30 reçus dans les trous oblongs 40 ménagés dans les longerons 21 de manière à bloquer le mouvement en translation des traverses mobiles 22 le long de direction principale d'extension par rapport aux longerons 21.

## Revendications

1. Système (1) de rigidification d'une structure (2), comportant :
- au moins une paire de tirants (3), chaque tirant (3) de la paire de tirants (3) comportant une première extrémité (4) fixée à la structure (2) et une deuxième extrémité (5),
- au moins un dispositif (6) de mise en tension des tirants (3) comportant :
- un élément de liaison déformable (7) fixé à la deuxième extrémité (5) de chaque tirant (3) de manière à relier les tirants (3),
- un actionneur (10) configuré pour déformer l'élément de liaison (7) de façon à l'amener à passer d'une configuration inactive dans laquelle les tirants (3) sont dans un premier état de tension à une configuration active dans laquelle les tirants (3) sont dans un deuxième état de tension, différent du premier état de tension.

2. Système selon la revendication 1, le deuxième état de tension étant un état de tension en traction des tirants (3).

3. Système selon la revendication 2, la tension en traction dans les tirants (3) étant plus élevée dans le deuxième état de tension par rapport au premier état de tension.

4. Système selon l'une quelconque des revendications précédentes, l'un des tirants (3) de la paire de tirants (3) étant fixé par sa deuxième extrémité (5) en un premier point de fixation (9a) de l'élément de liaison (7) et l'autre tirant (3) de la paire de tirants (3) étant fixé par sa deuxième extrémité (5) en un deuxième point de fixation (9b) de l'élément de liaison (7).

5. Système selon la revendication 4, la déformation de l'élément de liaison (7) lors de son passage de la configuration inactive à la configuration active entrainant un raccourcissement de la distance entre les premier (9a) et deuxième (9b) points de fixation de l'élément de liaison (7), cette distance étant mesurée le long d'une droite passant par les premier (9a) et deuxième (9b) points de fixation de l'élément de liaison (7).

6. Système selon la revendication 4 ou 5, l'élément de liaison (7) comportant une paire de bras (18), l'un des bras (18) comportant une extrémité proximale (70) reliée au centre (71) de l'élément de liaison (7) et une extrémité distale (72) comportant le premier point de fixation (9a) et l'autre bras (18) comportant une extrémité proximale (70) reliée au centre (71) de l'élément de liaison (7) et une extrémité distale (72) comportant le deuxième point de fixation (9b).

7. Système selon la revendication 6, les bras (18) de la paire de bras (18) de l'élément de liaison (7) étant alignés.

8. Système selon l'une quelconque des revendications précédentes, l'actionneur (10) étant configuré pour déformer l'élément de liaison (7) par serrage de l'élément de liaison (7) contre l'actionneur (10).

9. Système selon l'une quelconque des revendications précédentes, l'élément de liaison (7) s'étendant dans un premier plan (P1) et étant déformable dans un second plan (P2), perpendiculaire au premier plan (P1).

10. Système selon l'une quelconque des revendications précédentes, chaque tirant (3) de la paire de tirants (3) s'étendant dans le même plan que l'élément de liaison (7) ou dans un plan parallèle.

11. Système selon l'une quelconque des revendications précédentes, les tirants (3) de la paire de tirants (3) étant rigides.

12. Système selon l'une quelconque des revendications précédentes, les tirants (3) de la paire de tirants (3) étant situés dans le prolongement l'un de l'autre.

13. Système selon l'une quelconque des revendications précédentes, les tirants (3) de la paire de tirants (3) étant alignés.

14. Système selon l'une quelconque des revendications précédentes, l'actionneur (10) comportant un support de serrage (11) et étant configuré pour déformer l'élément de liaison (7) via un serrage, de préférence par vissage, de l'élément de liaison (7) en appui sur le support de serrage (11).

15. Système selon l'une quelconque des revendications précédentes, comportant au moins deux paires de tirants (3), les tirants (3) étant de préférence disposés en étoile autour de l'élément de liaison (7).

16. Système selon la revendication 15, l'élément de liaison (7) comportant au moins deux paires de bras (18), les bras (18) étant de préférence disposés en étoile autour du centre (71) de l'élément de liaison (7).

17. Système selon l'une quelconque des revendications précédentes, la structure (2) étant une structure de soutien, notamment une structure en treillis.

18. Procédé de rigidification d'une structure (2) à l'aide d'un système (1) tel que défini selon l'une quelconque des revendications précédentes, dans lequel on applique sur l'élément de liaison (7) une force de déformation prédéterminée à l'aide de l'actionneur (10) de façon à déformer l'élément de liaison (7) de manière contrôlée et ainsi le faire passer d'une configuration inactive dans laquelle les tirants (3) sont dans un premier état de tension à une configuration active dans laquelle les tirants (3) sont dans un deuxième état de tension prédéterminé, différent du premier état de tension.

19. Structure (20) en treillis comportant :
- au moins deux longerons (21) s'étendant parallèlement entre eux selon une direction principale d'extension,
- une pluralité de traverses (22, 32) réparties le long de la direction principale d'extension pour relier entre eux les longerons (21),
- une pluralité de tirants (3, 23) disposés de sorte à relier entre elles les traverses (22, 32) adjacentes,
au moins deux traverses (22, 32) adjacentes comportant entre elles un système (1) de rigidification selon l'une quelconque des revendications 1 à 17.

20. Structure selon la revendication 19, au moins certaines traverses étant mobiles en translation dans les deux sens le long de la direction principale d'extension par rapport aux longerons et au moins certaines traverses étant fixes par rapport aux longerons.

21. Suiveur solaire comportant :
- au moins une structure (20) en treillis selon la revendication 19 ou 20, notamment une poutre à treillis, s'étendant longitudinalement selon une direction principale d'extension,
- au moins une table supportée par la structure (20) en treillis, la table étant équipée d'au moins un dispositif de collecte d'énergie solaire, la table s'étendant longitudinalement selon la direction principale d'extension,
- au moins deux arceaux de support (60) mobiles en rotation autour d'un axe de rotation s'étendant le long de la direction principale d'extension, les arceaux (60) étant montés sur la structure (20) en treillis de façon à entrainer en rotation la structure (20) en treillis autour de l'axe de rotation des arceaux (60).

22. Champ solaire comportant une pluralité de suiveurs solaires selon la revendication 21, au moins certains suiveurs solaires étant de préférence disposés parallèlement les uns aux autres, notamment selon la direction Nord/Sud.
